# EUROPEAN PATENT SPECIFICATION

(11) **EP 2 953 295 B1**
(45) Date of publication and mention of the grant of the patent: **15.05.2019**
(21) Application number: 14171445.1
(22) Date of filing: 06.06.2014
(51) Int. Cl.: H04L 12/24, H04L 12/26

(54) **Automatic delta event synchronization in multiple manager-agent environments**
Automatische Delta-Ereignissynchronisation in mehreren Manager-Agentenumgebungen
Synchronisation d'événements delta automatique dans de multiples environnements agent-gestionnaire

(43) Date of publication of application: 09.12.2015
(73) Proprietor: Nokia Solutions and Networks Oy, 02610 Espoo (FI)
(72) Inventor: Hirsch, Lucian, 81373 Munich (DE)
(74) Representative: Nokia EPO representatives

(56) References cited:
- WO-A1-2012/031231
- GERHARDS ADISCON GMBH R: "The Syslog Protocol; rfc5424.txt", THE SYSLOG PROTOCOL; RFC5424.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 2009 (2009-03-01), XP015065515, [retrieved on 2009-03-10]
- Gerhards Rainer: "RELP - The Reliable Event Logging Protocol (Specification)", , 10 April 2014 (2014-04-10), XP055153216, Retrieved from the Internet: URL:http://www.rsyslog.com/doc/relp.html [retrieved on 2014-11-14]

## Description

### BACKGROUND OF THE INVENTION

### Field of the invention

The present invention relates to an automatic delta event synchronization in multiple manager-agent environments.

### Related background Art

The international Application WO2012/031231 A1 "Adaptive Data Transmission" describe a system and related methods for adaptive data transmission. In this application a so called data collector collects data from several LOG Producers and sends them to a Log Processor via a network connection. In case of low performance of the network connection, the collected data are buffered by the data collector.

The following meanings for the abbreviations used in this specification apply:
- 3GPP: 3^{rd} generation partnership program
- CORBA: common object request broker architecture
- EMS: element management system (element manager)
- IRP: integration reference point
- NE: network element
- NMS: network management system (network manager)
- OSS: operations support system
- SNMP: simple network management protocol
- SOAP: simple object access protocol
- TMN: telecommunication management network

The TMN principles define several layers for a hierarchical management of telecommunication networks, while each layer may play a dual role:
▪ Manager role (in a "managing system") for a subordinate layer (if available).
▪ Agent role (in a "managed system") for the next higher layer (if available).

The manager functionality may be implemented in a (higher level) management system with regard to (subordinate) management systems or to managed NEs. Reciprocally, the agent functionality may be implemented in a management system or a managed NE with regard to one or several managing system(s) on the next upper level.

One of the major challenges for stakeholders of telecommunications networks (vendors, integrators, service operators) is the huge amount of information to be processed in / exchanged between different systems involved in network management. More and more data needs to be available as real-time event reports and the impacts of communication disturbances are to be minimized. Only in this way the management information presented on different levels of the management hierarchy is synchronized with the real network condition and a required service level can be achieved.

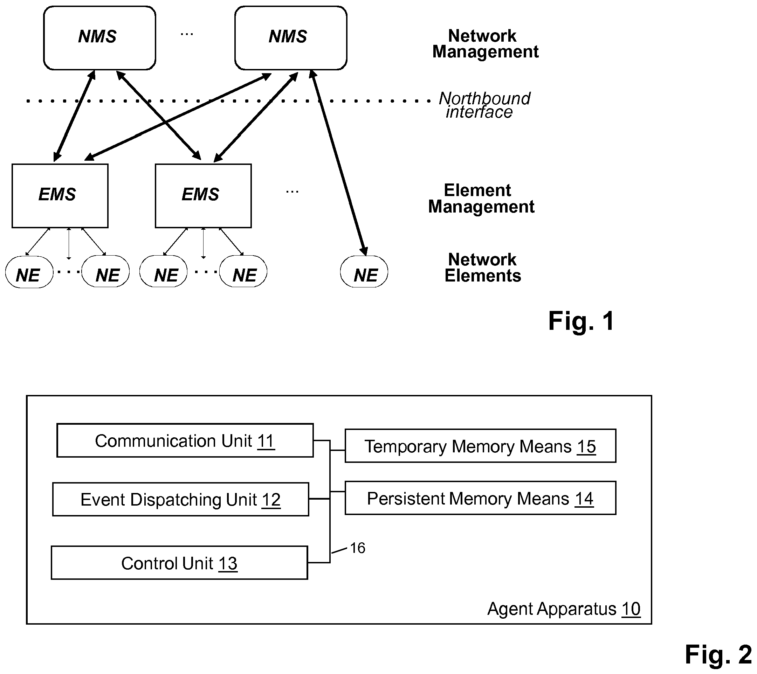

Fig. 1 shows as an example of manager-agent interactions, manager-agent interactions at an NMS-EMS interface. For this example interface, network management systems (NMSs) play the manager role, while (regional) element management systems (EMSs) act in the agent role. In turn, one EMS plays the manager role with regard to supervised network elements (NEs) .

After interruption and re-establishment of a communication at management interfaces, the time until the (higher level) management system is again synchronized with information available in the subordinate entities is of crucial importance especially for the management of mobile broadband networks, due to the large number of managed network elements and - as a consequence - to the huge amount of expected event reports.

Today, in the case of failure and later re-establishment of a manager-agent communication, management systems trigger a full synchronization of management information (e.g. alarms, configuration data, resource state information) also after short- and mid-term interruption of the manager-agent communication. This solution has several drawbacks:
- Unnecessary retransmission of management information that did not change during communication interruption.
- High interface load and processing usage on manager's and agent's sides.
- Manager entity needs to be self-acting and to implement synchronization operations. In case a management system (e.g. an NMS) integrates multi-vendor equipment (including EMS from different vendors), whose agents provide different interface technologies, the manager needs to implement a multitude of synchronization operations.
- Several simple managers in the market, not providing dedicated synchronization requests, cannot not be used for efficient integration purposes.

In 3GPP (TS 32.39x) a Technical Specification "Delta Synchronization IRP" is defined for avoiding the above full synchronization. However, this technique is complex and requires high implementation effort on both agent's and manager's sides. As a consequence, this approach is not used in current network management solutions.

### SUMMARY OF THE INVENTION

The present invention aims at providing a synchronization technique in multiple manager-agent environments that overcomes the above drawbacks.

This is achieved by the apparatus and method as defined in the appended claims. The invention can also be implemented by a computer program product.

According to an embodiment of the invention, an agent of a communication network receives a periodically transmitted specific keep alive message from a managing system and forwards event reports, and comprises as its operation modes an event forwarding mode and an event logging mode. In the event forwarding mode, the agent forwards the event reports to the managing system, and in the event logging mode, the agent stores the event reports in a persistent memory means. The operation mode of the agent is switched from the event forwarding mode to the event logging mode when the agent does not receive the specific keep alive message within a predefined time period, and the operation mode of the agent is switched from the event logging mode to the event forwarding mode when the agent receives the specific keep alive message.

According to the present invention, an optimized solution is provided which can be implemented in an entity playing an agent role for minimizing the synchronization time at management interfaces.

The solution according to the present invention is particularly useful for short- and mid-term interruptions of a manager-agent communication, a common problem in day-to-day network management operations.

The agent solution according to the present invention is able to fulfill the following requirements:
a) After re-establishment of the manager-agent communication, the synchronization of management information is automatically started without any manager action.
b) Only the information about network events occurred during the interruption time (that passed pre-defined filter criteria according to manager needs) is forwarded.
c) The functionality supports multi-manager configurations and is independent of network domain, interface technology or management hierarchy level.

In the following the invention will be described by way of embodiments thereof with reference to the accompanying drawings.

### BRIEF DESCRIPTION OF THE DRAWINGS

Fig. 1 shows a schematic block diagram illustrating an example of a management hierarchy.
Fig. 2 shows a schematic block diagram illustrating a structure of an agent apparatus according to an embodiment of the invention.
Fig. 3 shows a diagram illustrating a buffer entry structure according to an implementation example of the invention.
Fig. 4 shows a schematic diagram illustrating an event forwarding mode of the agent apparatus according to the implementation example.
Fig. 5 shows a schematic diagram illustrating an event logging mode of the agent apparatus according to the implementation example.
Fig. 6 shows a schematic diagram illustrating re-establishment of a manager-agent communication according to the implementation example.

### DESCRIPTION OF THE EMBODIMENTS

Fig. 2 shows a schematic block diagram illustrating a structure of an agent apparatus 10 according to an embodiment of the invention. The agent apparatus 10 is part of a manager-agent environment for a communication network. According to an implementation example of the invention, the agent apparatus 10 is implemented in the EMSs shown in Fig. 1.

The agent apparatus 10 comprises a communication unit 11, an event dispatching unit 12 and a control unit 13, which are connected via a link (e.g. a bus) 16. According to an implementation example, the agent apparatus 10 comprises a persistent memory means 14 and a temporary memory means 15, connected to the link 16. The persistent memory means 14 may comprise one or several log(s) and the temporary memory means 15 may comprise an event buffer. Alternatively, the persistent memory means 14 and/or the temporary memory means 15 are provided in the communication network outside the agent apparatus 10 and can be accessed by the agent apparatus 10 via the communication network.

The agent apparatus 10 may comprise a memory in which a program is stored, which includes program instructions that, when executed by the control unit 13, enables the agent apparatus 10 to operate in accordance with embodiments of the invention, as detailed below. In general, the embodiments of the invention may be implemented by computer software stored in the memory and executable by the control unit 13 of the agent apparatus 10, or by hardware, or by a combination of software and/or firmware and hardware.

The memory, persistent memory means 14 and temporary memory means 15 may be of any type suitable to the local technical environment and may be implemented using any suitable data storage technology, such as semiconductor-based memory devices, magnetic memory devices and systems, optical memory devices and systems, fixed memory and removable memory. The control unit 13 may be of any type suitable to the local technical environment, and may include one or more of general purpose computers, special purpose computers, microprocessors, digital signal processors (DSPs) and processors based on a multi-core processor architecture, as non-limiting examples.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

The communication unit 11 receives a periodically transmitted specific message, e.g. a "keep alive" message, from a managing system. For example, the managing system comprises the NMSs shown in Fig. 1. This allows the agent apparatus 10 to supervise a correct communication between the managing system (e.g. a manager (managing device) of the managing system, e.g. an NMS) and the agent apparatus 10 (manager-agent communication) on agent side by means of periodical "keep alive" messages received from the manager (managing device). Within a pre-defined time interval (e.g. a so called "alivePeriod") the managing device has to send a simple "keep alive" message to allow the supervision of the communication on agent side.

The agent apparatus 10 is able to work, for each connected managing device, in two alternating operation modes: event forwarding and event logging. Both operation modes use the same pre-defined manager-specific filter criteria regarding the selection of event reports in accordance to the needs of each connected managing device. The switch between these operation modes is coordinated by the event dispatching unit 12 (event dispatcher component) in the agent apparatus 10. In other words, the event dispatching unit 12 switches the operation mode of the apparatus between the event forwarding mode and the event logging mode.

During the event forwarding mode which is the normal case, i.e. during correct functionality of the manager-agent communication, event reports generated in a network (e.g. the network shown in Fig. 1) that need to be forwarded to the managing device, i.e. after passing pre-defined filter criteria, are inserted into a temporary buffer, e.g. the temporary memory means 15, and subsequently sent (i.e. forwarded) to the managing device by the communication unit 11. In other words, in the event forwarding mode, the control unit 13 causes the communication unit 11 to forward the event reports to the managing system. According to an embodiment of the invention, the control unit 13 temporarily stores the event reports to be forwarded to the managing device in the temporary memory means 15, and the communicating unit 11 forwards the event reports temporarily stored in the temporary memory means 15 to the managing device. Preferably, the temporary buffer is common for all managing devices communicating with the agent apparatus 10.

The absence of the periodical specific (e.g. "keep alive") message from a managing deviceₓ triggers a switch from the event forwarding mode into the event logging mode for this managing deviceₓ. In other words, the event dispatching unit 12 switches the operation mode of the agent apparatus 10 from the event forwarding mode to the event logging mode when the communication unit 11 does not receive the specific message within a predefined time period. In the event logging mode, the control unit 13 stores the event reports in the persistent memory means 14.

More specifically, upon entering the event logging mode, event reports already buffered in the temporary buffer and not yet forwarded to the managing deviceₓ are moved into the persistent memory means 14 (e.g. a managing device-specific log file). All new event reports that pass pre-defined filter criteria for the managing deviceₓ are then appended into the log. In other words, the control unit 13 moves the event reports to be forwarded to the managing deviceₓ, which are temporarily stored in the temporary memory means 15, to the persistent memory means 14, and appends "new" event reports into the persistent memory means 14.

Within the event logging mode, the first reception of the specific (e.g. "keep alive") message from the managing deviceₓ is a trigger for the event dispatching unit 12 to switch back to the event forwarding mode. In other words, the event dispatching unit 12 switches the operation mode of the agent apparatus 10 from the event logging mode to the event forwarding mode when the communication unit 11 receives the specific message from the managing deviceₓ.

Firstly the logged event reports are fetched and forwarded by the agent apparatus 10 to the managing deviceₓ and subsequently the forwarding of newly occurred event reports relevant for the current managing deviceₓ is resumed as usual.

In other words, when the event dispatching unit 12 switches the operation mode of the agent apparatus 10 for the managing deviceₓ from the event logging mode to the event forwarding mode, the control unit 13 causes the communication unit 11 to forward the event reports to be forwarded to the managing deviceₓ, which are stored in the persistent memory means 14, to the managing deviceₓ, and subsequently the forwarding of newly occurred event reports relevant for the current managing deviceₓ is resumed as usual.

According to an embodiment of the invention, a special syntax of the logged records to be described below (each record related to one event report which successfully passed the filter constrains for at least one managing device) allows for the usage of each single log entry for all managing devices (managers) and an optimal performance in multi-manager configurations.

It is to be noted that the temporary buffering is used only for very short time spans in order to bridge the gap between the rate of event reports received by the agent apparatus 10 and the rate of forwarded event reports towards upper level systems. Further, the logging of received event reports is needed in order to avoid the loss of management information in case of short-term or mid-term (several seconds or few minutes) interruption of a manager-agent communication.

In the following an implementation example of the invention will be described. In particular, the following use cases will be described:
- Initiating a manager-agent communication.
- Event forwarding mode.
- Interruption of the manager-agent communication and event logging mode.
- Re-establishment of the manager-agent communication.

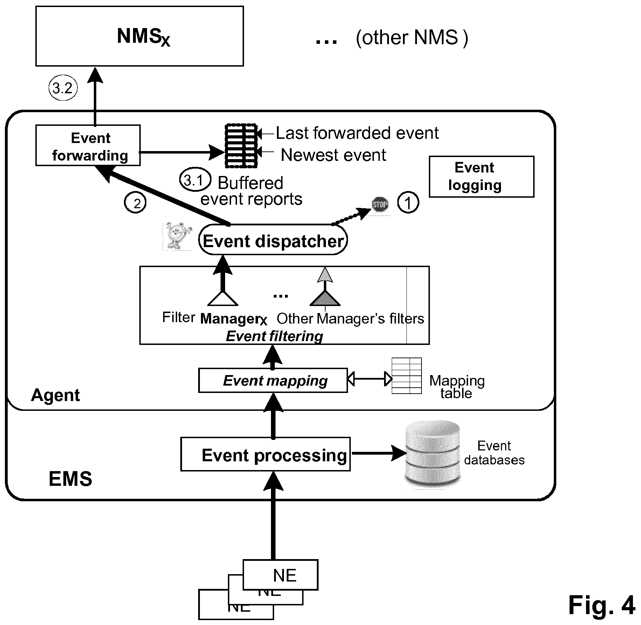

For exemplification purposes the following description uses two manager entities (managing devices) connected to an agent, e.g. the agent apparatus of Fig. 2, but the principles of the invention apply for several connected managers (managing devices) as well. Figs. 4 to 6 show from a logical point of view only the agent functionality with regard to one manager entity (called NMSₓ). In the implementation example depicted in Figs. 4 to 6, the agent is part of an EMS performing event processing for NEs connected to the EMS according to a management hierarchy e.g. as shown in Fig. 1, using an event database. The agent performs event mapping on processed events (processed event reports), using a mapping table, and event filtering on mapped events (mapped event reports) for managing devices (NMSs) connected to the EMS according to the management hierarchy. In the event filtering process, the same or different filter constraint(s) are provided for the connected managing devices. The filtered event reports are provided to an event dispatcher, e.g. the event dispatching unit 12, which switches between an event forwarding mode and an event logging mode of the agent.

It is to be noted that the manager-agent interactions at the NMS-EMS interface are used only as an example for describing the present invention. However, the technique of the invention applies for different manager-agent interfaces within a management hierarchy as well.

### Initiating the manager-agent communication

At a start time of the manager-agent communication, a managerₓ (managing deviceₓ, e.g. NMSₓ) may send to the agent a subscription request for receiving spontaneous event reports. This request may contain selection criteria (filter constraints) of required event information.

Alternatively, for management systems not supporting subscription requests, manager-specific filter constraints can be locally preconfigured in the agent. In such a case, the agent forwards the event reports to the managing deviceₓ as soon as the event reports pass the managing deviceₓ-specific filter constraints in the agent.

The event dispatcher suspends the event logging mode for the managerₓ (step ① in Fig. 4) and initializes the event forwarding mode for the managerₓ (step ② in Fig. 4).

### Event forwarding mode

Fig. 4 shows a schematic diagram illustrating an event forwarding mode of the agent apparatus according to an implementation example of the invention.

As depicted in Fig. 4, the agent maintains an event buffer (ring buffer principle), in which each event report to be forwarded to at least one of connected managers (i.e. which successfully passed the event filtering) is temporarily queued. The event buffer may be implemented by the temporary memory means 15.

For each connected manager, a buffer index indicates a buffer position of a last forwarded event report. Another index (used for all managers) points to a buffer position of a newest (still to be forwarded) buffered event report.

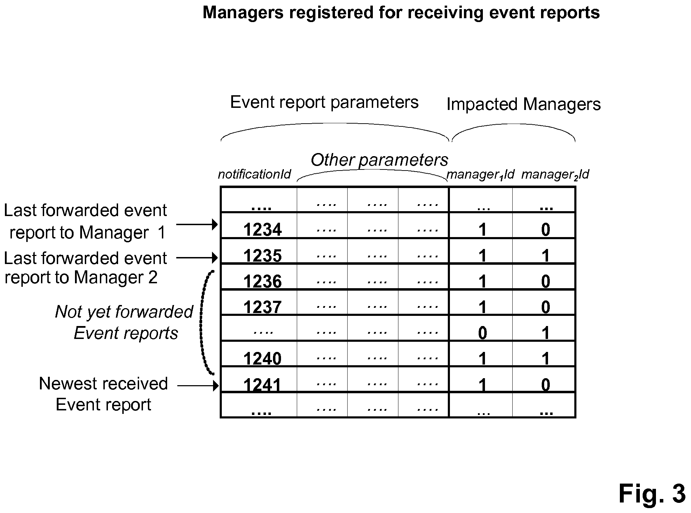

In order to optimize the processing in case of multi-manager configurations, a buffer entry structure contains (in addition to event report parameters) also an identification of the managers (managerₓId) for which the current event report passed the manager-specific filter criteria, as illustrated in Fig. 3. Each buffer entry means that the current event report successfully passed the filter criteria for at least one of the connected managers.

Referring to Fig. 3, for each buffer entry a dedicated value of the parameter managerₓId indicates whether the event report is "relevant" (i.e. it passed the filter criteria and shall be forwarded) for the current manager (e.g. value 1) or "not relevant" (e.g. value 0).

The size of the ring buffer is dimensioned in such a way that all event reports to be forwarded between two consecutive "keep alive" manager messages can be queued so that - independently of the time when the manager-agent communication (within the interval defined by an alivePeriod value) may break - no information is lost.

As long as periodical "keep alive" messages are received from a manager, the agent is able to recognize that both, the manager itself (e.g. NMSₓ in Fig. 4) as well as the manager-agent interface, are working correctly and the following steps are processed:
▪ Each newly received event report is tested against each manager's filter criteria.
▪ When the event report successfully passes the event filtering for the managerₓ, the "Event forwarding" component buffers it and subsequently sends it to the managerₓ (step ③ comprising sub-steps 3.1 and 3.2 in Fig. 4). The managerₓId parameter of the managerₓ in the buffer entry is set to a value "relevant" (e.g. 1), and all corresponding parameters of other managers have still a default value (e.g. 0).
▪ If the event report successfully passes the event filtering for a further manager_{y}, only a related manager_{y}Id parameter's value of the already existing buffer entry is updated and the event report is sent to the manager_{y}.
▪ If the event report did not pass the event filtering for any connected manager, the received event report is discarded.

The functions of the event forwarding component may be implemented by the communication unit 11 and the control unit 13 of Fig. 2.

### Interruption of the manager-agent communication and event logging mode

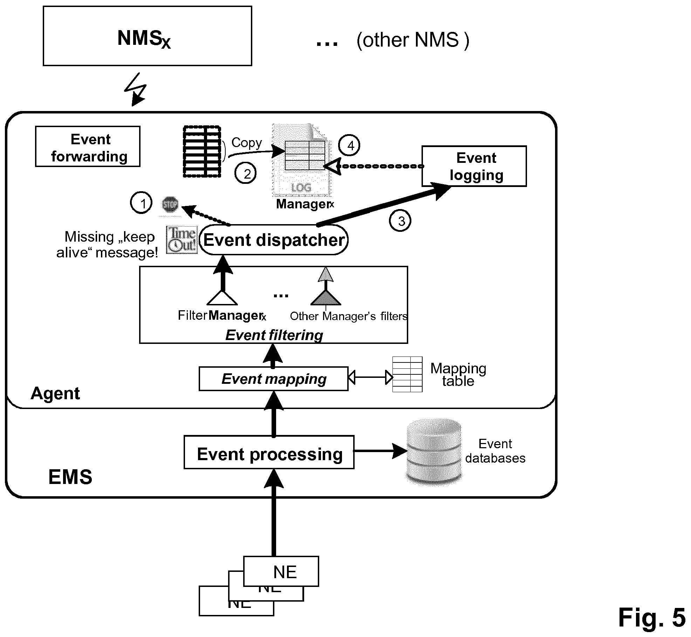

Fig. 5 shows a schematic diagram illustrating an event logging mode of the agent apparatus according to the implementation example.

A missing "keep alive" message from the managerₓ leads to a time-out signal in the agent, which triggers the following event dispatcher activities:
▪ The event dispatcher suspends events routing towards the event forwarding component (step ① in Fig. 5).
▪ The event report parameters of all buffer entries relevant for the managerₓ between the last forwarded event report and the newest received event report are copied into a persistent log (step ② in Fig. 5). The persistent log may be implemented by the persistent memory means 14.
▪ The event dispatcher switches the routing of newly received event reports towards the event logging component, i.e. each new event passing the manager-defined filter criteria is now appended into the log (steps ③ and ④ in Fig. 5). The functions of the event logging component may be implemented by the control unit 13.

For other managers (as long as their communication to the agent is still working correctly), the temporary buffering and forwarding of newly received event reports able to pass the manager-specific filter criteria continues. In all these new buffer entries the value of the parameter managerₓId is still "not relevant" (e.g. 0).

### Re-establishment of the manager-agent communication

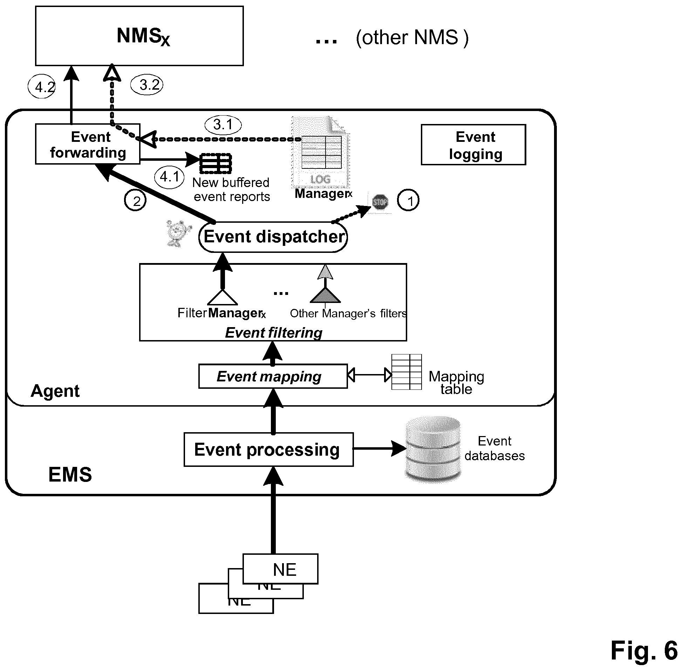

Fig. 6 shows a schematic diagram illustrating re-establishment of the manager-agent communication according to the implementation example.

The first reception of a "keep alive" message from the managerₓ (after communication re-establishment) triggers following event dispatcher activities:
▪ The event dispatcher suspends routing of new event reports towards the event logging component (step ① in Fig. 6) .
▪ The event forwarding component is activated in a restored mode (step ② in Fig. 6) in order to retrieve first the logged event records and to forward them to the managerₓ (step ③ comprising sub-steps 3.1 and 3.2 in Fig. 6).
▪ The manager-specific buffer index indicating the last forwarded event report is initialized and the log content is removed. Newly received event reports that pass the managerₓ-defined filter criteria are queued again in the temporary buffer and subsequently forwarded to the managerₓ (steps 4.1 and 4.2 in Fig. 6).

According to an implementation example of the invention, also a common log (common persistent memory means) with a similar structure as the temporary buffer (temporary memory means) for all connected managers is used. In this case the following is considered:
(1) Switch from event forwarding mode to event logging mode for managerₓ:
   - If some buffered event reports relevant for the managerₓ are already present in the common log, e.g. due to previous failures of communications between the agent and other managers, only the value of the parameter managerₓId in the log entry has to be updated (i.e. set to the value "relevant").
   - Buffered event reports relevant only (but not yet forwarded) for the managerₓ are copied into the log and the values of all parameters manager_{y}Id (y≠x) are set to "not relevant".
(2) Switch from event logging mode to event forwarding mode for managerₓ:
   - All logged event reports relevant for the managerₓ (i.e. having the managerₓId value set to "relevant") are retrieved by the event forwarding component and forwarded to the managerₓ.
   - If a logged event report is relevant only for the managerₓ, the event forwarding component removes it in the log. Otherwise (i.e. the logged event report is relevant for other managers as well), only the value of the managerₓId parameter is set to the value "not relevant".

Which solution (i.e. manager-specific logs or common log) is preferably implemented depends on the agent's overall performance and the number of connected managers.

The embodiments/implementation examples of the invention provide the following advantages:
- Significant improvement of work efficiency for operators in charge of network management, since the synchronization is much faster as it takes into account only "delta" management information occurring during a manager-agent communication interruption. This is especially significant for northbound interfaces of OSS family products, required to deal with a huge amount of event records.
- No need of manager-triggered synchronization operations, i.e. alignment starts fully automatically (triggered by agent) after re-establishment of the manager-agent communication. This is especially relevant in multi-vendor configurations, avoiding that a manager needs to implement different synchronization mechanisms supported by the vendor-specific agents.
- The functionality supports multi-manager configurations as well and is independent of network domain, manager-agent interface technology or management hierarchy level.

The event synchronization technique according to the present invention is less complex, needs no explicit time synchronization operation between the agent and the connected managing devices and can be implemented independently of a particular protocol used in the management system (e.g. CORBA, SOAP). According to the present invention, "unsent" events are transferred from the agent to the manager after a connection interruption and consecutive connection setup.

According to the event synchronization technique of the invention, about a factor 10 less data volume needs to be transferred in comparison to a full synchronization. Consequently, significantly less time for synchronization of management information is needed. The suggested technique is not only applicable within telecommunication domain, but can be applied also in other domains, like power distribution networks or long-distance heating networks.

It is to be understood that the above description is illustrative of the invention and is not to be construed as limiting the invention. Various modifications and applications may occur to those skilled in the art without departing from the scope of the invention as defined by the appended claims.

## Claims

1. An agent apparatus (10) for communicating with a managing system comprising:
a communication unit (11) configured to receive a periodically transmitted specific keep alive message from the managing system and to forward event reports;
an event dispatching unit (12) configured to switch an operation mode of the agent apparatus (10) between an event forwarding mode and an event logging mode; and
a control unit (13) configured to control the agent apparatus (10),
a temporary memory means(15) and a persistent (14) memory means, wherein,
in the event forwarding mode, the control unit (13) is configured to cause the communication unit (11) to insert the event reports into the temporary memory means (15) and to subsequently forward the event reports to the managing system, and
in the event logging mode, the control unit (13) is configured to store the event reports in a persistent memory means (14), and wherein
the event dispatching unit (12) is configured to switch the operation mode of the agent apparatus from the event forwarding mode to the event logging mode when the communication unit (11) does not receive the specific keep alive message within a predefined time period, and
the event dispatching unit (12) is configured to switch the operation mode of the agent apparatus from the event logging mode to the event forwarding mode when the communication unit (11) receives the specific keep alive message,
wherein both operation modes use the same pre-defined managing system specific filter criteria regarding the selection of the event reports, and wherein the criteria are received from the managing system in a subscription request at a start time of the manager-agent communication or are locally preconfigured in the agent apparatus (10).

2. The agent apparatus (10) of claim 1, wherein each one of the event reports is to be forwarded to at least one of a plurality of managing devices of the managing system, wherein
the event dispatching unit (12) is configured to switch the operation mode of the agent apparatus (10) from the event forwarding mode to the event logging mode for a managing device of the plurality of managing devices, when the communication unit (11) does not receive the specific keep alive message from the managing device within a predefined time period for the managing device, and
the event dispatching unit (12) is configured to switch the operation mode of the agent apparatus (10) for the managing device from the event logging mode to the event forwarding mode when the communication unit (11) receives the specific keep alive message from the managing device, and wherein
in the event forwarding mode for the managing device, the control unit (13) is configured to cause the communication unit (11) to forward the event reports, which are to be forwarded to the managing device, to the managing device, and
in the event logging mode for the managing device, the control unit (13) is configured to store the event reports, which are to be forwarded to the managing device, in the persistent memory means (14).

3. The agent apparatus (10) of claim 2, wherein,
in the event forwarding mode for the managing device, the control unit (13) is configured to temporarily store the event reports to be forwarded to the managing device in the temporary memory means (15) and the communicating unit (11) is configured to forward the event reports temporarily stored in the temporary memory means (15) to the managing device, and
when the event dispatching unit (12) switches the operation mode of the agent apparatus (10) for the managing device from the event forwarding mode to the event logging mode, the control unit (13) is configured to move the event reports to be forwarded to the managing device, which are temporarily stored in the temporary memory means (15), to the persistent memory means (14).

4. The agent apparatus (10) of claim 3, wherein, when the event dispatching unit (12) switches the operation mode of the agent apparatus (10) for the managing device from the event logging mode to the event forwarding mode, the control unit (13) is configured to cause the communication unit (11) to forward the event reports to be forwarded to the managing device, which are stored in the persistent memory means (14), to the managing device.

5. The agent apparatus (10) of any one of claims 2 to 4, wherein the temporary memory means and the persistent memory means each comprises a common memory for the plurality of managing devices and, when storing the event reports in the temporary memory means (15) or the persistent memory means (14), the control unit (13) is configured to store the event reports together with at least one of a plurality of indicators indicating which of the plurality of managing devices the event reports are to be forwarded to, wherein each one of the plurality of indicators is associated with one of the plurality of managing devices.

6. The agent apparatus (10) of claim 5, wherein the control unit (13) is configured to delete the indicator of the managing device from the temporary memory means or the persistent memory means (14), after having caused the forwarding of the event reports to be forwarded to the managing device by the communication unit (11), and to delete the event reports to be forwarded to the managing device from the temporary memory means or the persistent memory means in case no indicator for another managing device is stored together with the event reports in the temporary memory means or the persistent memory means.

7. The agent apparatus (10) of any one of claims 2 to 4, wherein the temporary memory means comprises a common memory for the plurality of managing devices and, when storing the event reports in the temporary memory means (15), the control unit (13) is configured to store the event reports together with at least one of a plurality of indicators indicating which of the plurality of managing devices the event reports are to be forwarded to, wherein each one of the plurality of indicators is associated with one of the plurality of managing devices, and
wherein the persistent memory means (14) comprises separate memories for each of the plurality of managing devices.

8. The agent apparatus (10) of claim 7, wherein the control unit (13) is configured to delete the event reports to be forwarded to the managing device from the persistent memory means (14), after having caused their forwarding by the communication unit (11), and
wherein the control unit (13) is configured to delete the indicator of the managing device from the temporary memory means, after having caused the forwarding of the event reports to be forwarded to the managing device by the communication unit (11), and to delete the event reports to be forwarded to the managing device from the temporary memory means in case no indicator for another managing device is stored together with the event reports in the temporary memory means.

9. The agent apparatus (10) of any one of claims 2 to 8, wherein, in the event forwarding mode, the control unit (13) is configured to cause the communication unit (11) to forward the event reports to the managing device in case a request for receiving event reports has been received by the agent apparatus (10) from the managing device beforehand.

10. A method of controlling an agent apparatus (10) for communicating with a managing system receiving a periodically transmitted specific keep alive message from the managing system and forwarding event reports, an operation mode of the agent apparatus comprising an event forwarding mode and an event logging mode, the method comprising:
receiving, from the managing system at a start time of the manager-agent communication, a subscription request containing selection criteria of required event information or locally preconfiguring, in the agent apparatus (10), the selection criteria;
in the event forwarding mode, controlling the agent apparatus to insert the event reports into a temporary memory means (15) and to subsequently forward the event reports to the managing system,
in the event logging mode, storing the event reports in a persistent memory means (14),
switching the operation mode of the agent apparatus (10) from the event forwarding mode to the event logging mode when the agent apparatus does not receive the specific keep alive message within a predefined time period, and
switching the operation mode of the agent apparatus (10) from the event logging mode to the event forwarding mode when the agent apparatus receives the specific keep alive message,
wherein both operation modes use the same pre-defined managing system specific filter criteria regarding the selection of event reports.

11. The method of claim 10, wherein each one of the event reports is to be forwarded to at least one of a plurality of managing devices of the managing system, the method comprising:
switching the operation mode of the agent apparatus from the event forwarding mode to the event logging mode for a managing device of the plurality of managing devices, when the agent apparatus does not receive the specific keep alive message from the managing device within a predefined time period for the managing device, and
switching the operation mode of the agent apparatus for the managing device from the event logging mode to the event forwarding mode when the agent apparatus receives the specific keep alive message from the managing device,
in the event forwarding mode for the managing device, causing the agent apparatus to forward the event reports which are to be forwarded to the managing device, to the managing device, and
in the event logging mode for the managing device, storing the event reports, which are to be forwarded to the managing device, in the persistent memory means.

12. The method of claim 11, comprising:
in the event forwarding mode for the managing device, temporarily storing the event reports to be forwarded to the managing device in a temporary memory means (15), the agent apparatus forwarding the event reports temporarily stored in the temporary memory means to the managing device, and
when the operation mode of the agent apparatus for the managing device is switched from the event forwarding mode to the event logging mode, moving the event reports to be forwarded to the managing device, which are temporarily stored in the temporary memory means, to the persistent memory means.

13. The method of claim 12, comprising:
when the operation mode of the agent apparatus for the managing device is switched from the event logging mode to the event forwarding mode, causing the agent apparatus to forward the event reports to be forwarded to the managing device, which are stored in the persistent memory means, to the managing device.

14. The method of any one of claims 11 to 13, the temporary memory means and the persistent memory means each comprises a common memory for the plurality of managing devices, the method comprising:
when storing the event reports in the temporary memory means or the persistent memory means, storing the event reports together with at least one of a plurality of indicators indicating which of the plurality of managing devices the event reports are to be forwarded to, wherein each one of the plurality of indicators is associated with one of the plurality of managing devices.

15. The method of claim 14, comprising:
deleting the indicator of the managing device from the temporary memory means or the persistent memory means (14), after having caused the forwarding of the event reports to be forwarded to the managing device by the agent apparatus, and deleting the event reports to be forwarded to the managing device from the temporary memory means or the persistent memory means in case no indicator for another managing device is stored together with the event reports in the temporary memory means or the persistent memory means.

16. The method of any one of claims 11 to 13, wherein the temporary memory means comprises a common memory for the plurality of managing devices, the method comprising:
when storing the event reports in the temporary memory means (15), storing the event reports together with at least one of a plurality of indicators indicating which of the plurality of managing devices the event reports are to be forwarded to, wherein each one of the plurality of indicators is associated with one of the plurality of managing devices, and
wherein the persistent memory means (14) comprises separate memories for each of the plurality of managing devices.

17. The method of claim 16, comprising:
deleting the event reports to be forwarded to the managing device from the persistent memory means, after having caused their forwarding by the agent apparatus, and
deleting the indicator of the managing device from the temporary memory means, after having caused the forwarding of the event reports to be forwarded to the managing device by the agent apparatus, and deleting the event reports to be forwarded to the managing device from the temporary memory means in case no indicator for another managing device is stored together with the event reports in the temporary memory means.

18. The method of any one of claims 11 to 17, comprising:
in the event forwarding mode, causing the agent apparatus to forward the event reports to the managing device in case a request for receiving event reports has been received by the agent apparatus from the managing device beforehand.

19. A computer program adapted to perform the methods according to claims 10 to 18.

## Patentansprüche

1. Agentenvorrichtung (10) zur Kommunikation mit einem Verwaltungssystem, umfassend:
eine Kommunikationseinheit (11), die dafür ausgelegt ist, eine periodisch ausgesendete Keepalive-Nachricht von dem Verwaltungssystem zu empfangen und Ereignisberichte weiterzuleiten;
eine Ereignisverarbeitungseinheit (12), die dafür ausgelegt ist, einen Betriebsmodus der Agentenvorrichtung (10) zwischen einem Ereignisweiterleitungsmodus und einem Ereignisprotokollierungsmodus umzuschalten; und
eine Steuereinheit (13), die dafür ausgelegt ist, die Agentenvorrichtung (10) zu steuern,
ein temporäres Speichermittel (15) und ein persistentes (14) Speichermittel, wobei
in dem Ereignisweiterleitungsmodus die Steuereinheit (13) dafür ausgelegt ist, zu bewirken, dass die Kommunikationseinheit (11) die Ereignisberichte in das temporäre Speichermittel (15) einfügt und anschließend die Ereignisberichte an das Verwaltungssystem weiterleitet, und
in dem Ereignisprotokollierungsmodus die Steuereinheit (13) dafür ausgelegt ist, die Ereignisberichte in einem persistenten Speichermittel (14) zu speichern, und wobei
die Ereignisverarbeitungseinheit (12) dafür ausgelegt ist, den Betriebsmodus der Agentenvorrichtung von dem Ereignisweiterleitungsmodus in den Ereignisprotokollierungsmodus umzuschalten, wenn die Kommunikationseinheit (11) die spezifische Keepalive-Nachricht nicht innerhalb eines vorgegebenen Zeitraums empfängt, und
die Ereignisverarbeitungseinheit (12) dafür ausgelegt ist, den Betriebsmodus der Agentenvorrichtung von dem Ereignisprotokollierungsmodus in den Ereignisweiterleitungsmodus umzuschalten, wenn die Kommunikationseinheit (11) die spezifische Keepalive-Nachricht empfängt,
wobei beide Betriebsmodi dieselben vorgegebenen verwaltungssystemspezifischen Filterkriterien hinsichtlich der Auswahl der Ereignisberichte nutzen, und wobei die Kriterien von dem Verwaltungssystem in einer Abonnement-Anforderung zu einer Startzeit der Verwalter-Agenten-Kommunikation empfangen werden oder in der Agentenvorrichtung (10) lokal voreingestellt sind.

2. Agentenvorrichtung (10) nach Anspruch 1, wobei jeder der Ereignisberichte an mindestens eine von einer Mehrzahl von Verwaltungsvorrichtungen des Verwaltungssystems weiterzuleiten ist, wobei die Ereignisverarbeitungseinheit (12) dafür ausgelegt ist, den Betriebsmodus der Agentenvorrichtung (10) von dem Ereignisweiterleitungsmodus in den Ereignisprotokollierungsmodus für eine Verwaltungsvorrichtung der Mehrzahl von Verwaltungsvorrichtungen umzuschalten, wenn die Kommunikationseinheit (11) die spezifische Keepalive-Nachricht von der Verwaltungsvorrichtung nicht innerhalb eines vorgegebenen Zeitraums für die Verwaltungsvorrichtung empfängt, und
die Ereignisverarbeitungseinheit (12) dafür ausgelegt ist, den Betriebsmodus der Agentenvorrichtung (10) für die Verwaltungsvorrichtung von dem Ereignisprotokollierungsmodus in den Ereignisweiterleitungsmodus umzuschalten, wenn die Kommunikationseinheit (11) die spezifische Keepalive-Nachricht von der Verwaltungsvorrichtung empfängt, und wobei
in dem Ereignisweiterleitungsmodus für die Verwaltungsvorrichtung die Steuereinheit (13) dafür ausgelegt ist, zu bewirken, dass die Kommunikationseinheit (11) die Ereignisberichte, die an die Verwaltungsvorrichtung weiterzuleiten sind, an die Verwaltungsvorrichtung weiterleitet, und
in dem Ereignisweiterleitungsmodus für die Verwaltungsvorrichtung die Steuereinheit (13) dafür ausgelegt ist, die Ereignisberichte, die an die Verwaltungsvorrichtung weiterzuleiten sind, in dem persistenten Speichermittel (14) zu speichern.

3. Agentenvorrichtung (10) nach Anspruch 2, wobei
in dem Ereignisweiterleitungsmodus für die Verwaltungsvorrichtung die Steuereinheit (13) dafür ausgelegt ist, die Ereignisberichte, die an die Verwaltungsvorrichtung weiterzuleiten sind, in dem temporären Speichermittel (15) zu speichern, und die Kommunikationseinheit (11) dafür ausgelegt ist, die Ereignisberichte, die temporär in dem temporären Speichermittel (15) gespeichert sind, an die Verwaltungsvorrichtung weiterzuleiten, und
wenn die Ereignisverarbeitungseinheit (12) den Betriebsmodus der Agentenvorrichtung (10) für die Verwaltungsvorrichtung von dem Ereignisweiterleitungsmodus in den Ereignisprotokollierungsmodus umschaltet, die Steuereinheit (13) dafür ausgelegt ist, die Ereignisberichte, die an die Verwaltungsvorrichtung weiterzuleiten sind, die temporär in dem temporären Speichermittel (15) gespeichert sind, in das persistente Speichermittel (14) zu verschieben.

4. Agentenvorrichtung (10) nach Anspruch 3, wobei, wenn die Ereignisverarbeitungseinheit (12) den Betriebsmodus der Agentenvorrichtung (10) für die Verwaltungsvorrichtung von dem Ereignisprotokollierungsmodus in den Ereignisweiterleitungsmodus umschaltet, die Steuereinheit (13) dafür ausgelegt ist, zu bewirken, dass die Kommunikationseinheit (11) die Ereignisberichte, die an die Verwaltungsvorrichtung weiterzuleiten sind, die in dem persistenten Speichermittel (14) gespeichert sind, an die Verwaltungsvorrichtung weiterleitet.

5. Agentenvorrichtung (10) nach einem der Ansprüche 2 bis 4, wobei das temporäre Speichermittel und das persistente Speichermittel jeweils einen gemeinsamen Speicher für die Mehrzahl von Verwaltungsvorrichtungen umfassen und beim Speichern der Ereignisberichte in dem temporären Speichermittel (15) oder dem persistenten Speichermittel (14) die Steuereinheit (13) dafür ausgelegt ist, die Ereignisberichte zusammen mit mindestens einem von einer Mehrzahl von Indikatoren zu speichern, die angeben, an welche der Mehrzahl von Verwaltungsvorrichtungen die Ereignisberichte weiterzuleiten sind, wobei jeder der Mehrzahl von Indikatoren mit einer der Mehrzahl von Verwaltungsvorrichtungen in Verbindung steht.

6. Agentenvorrichtung (10) nach Anspruch 5, wobei die Steuereinheit (13) dafür ausgelegt ist, den Indikator der Verwaltungsvorrichtung aus dem temporären Speichermittel oder dem persistenten Speichermittel (14) zu löschen, nachdem sie die Weiterleitung der Ereignisberichte bewirkt hat, die durch die Kommunikationseinheit (11) an die Verwaltungsvorrichtung weiterzuleiten sind, und die Ereignisberichte, die an die Verwaltungsvorrichtung weiterzuleiten sind, aus dem temporären Speichermittel oder dem persistenten Speichermittel zu löschen, falls kein Indikator für eine andere Verwaltungsvorrichtung zusammen mit den Ereignisberichten in dem temporären Speichermittel oder dem persistenten Speichermittel gespeichert ist.

7. Agentenvorrichtung (10) nach einem der Ansprüche 2 bis 4, wobei das temporäre Speichermittel einen gemeinsamen Speicher für die Mehrzahl von Verwaltungsvorrichtungen umfasst und beim Speichern der Ereignisberichte in dem temporären Speichermittel (15) die Steuereinheit (13) dafür ausgelegt ist, die Ereignisberichte zusammen mit mindestens einem von einer Mehrzahl von Indikatoren zu speichern, die angeben, an welche der Mehrzahl von Verwaltungsvorrichtungen die Ereignisberichte weiterzuleiten sind, wobei jeder der Mehrzahl von Indikatoren mit einer der Mehrzahl von Verwaltungsvorrichtungen in Verbindung steht, und
wobei das persistente Speichermittel (14) separate Speicher für jede der Mehrzahl von Verwaltungsvorrichtungen umfasst.

8. Agentenvorrichtung (10) nach Anspruch 7, wobei die Steuereinheit (13) dafür ausgelegt ist, die Ereignisberichte, die an die Verwaltungsvorrichtung weiterzuleiten sind, aus dem persistenten Speichermittel (14) zu löschen, nachdem sie deren Weiterleitung durch die Kommunikationseinheit (11) bewirkt hat, und
wobei die Steuereinheit (13) dafür ausgelegt ist, den Indikator der Verwaltungsvorrichtung aus dem temporären Speichermittel zu löschen, nachdem sie die Weiterleitung der Ereignisberichte bewirkt hat, die durch die Kommunikationseinheit (11) an die Verwaltungsvorrichtung weiterzuleiten sind, und die Ereignisberichte, die an die Verwaltungsvorrichtung weiterzuleiten sind, aus dem temporären Speichermittel zu löschen, falls kein Indikator für eine andere Verwaltungsvorrichtung zusammen mit den Ereignisberichten in dem temporären Speichermittel gespeichert ist.

9. Agentenvorrichtung (10) nach einem der Ansprüche 2 bis 8, wobei in dem Ereignisweiterleitungsmodus die Steuereinheit (13) dafür ausgelegt ist, zu bewirken, dass die Kommunikationseinheit (11) die Ereignisberichte an die Verwaltungsvorrichtung weiterleitet, falls eine Anforderung für den Empfang von Ereignisberichten zuvor durch die Agentenvorrichtung (10) von der Verwaltungsvorrichtung empfangen wurde.

10. Verfahren zur Steuerung einer Agentenvorrichtung (10) zur Kommunikation mit einem Verwaltungssystem, die eine periodisch ausgesendete Keepalive-Nachricht von dem Verwaltungssystem empfängt, und zur Weiterleitung von Ereignisberichten, wobei ein Betriebsmodus der Agentenvorrichtung einen Ereignisweiterleitungsmodus und einen Ereignisprotokollierungsmodus umfasst, das Verfahren umfassend:
Empfangen einer Abonnement-Anforderung, die Auswahlkriterien erforderlicher Ereignisinformationen enthält, von dem Verwaltungssystem zu einer Startzeit der Verwalter-Agenten-Kommunikation, oder lokales Voreinstellen der Auswahlkriterien in der Agentenvorrichtung (10);
in dem Ereignisweiterleitungsmodus, Steuern der Agentenvorrichtung, um die Ereignisberichte in ein temporäres Speichermittel (15) einzufügen und anschließend die Ereignisberichte an das Verwaltungssystem weiterzuleiten,
in dem Ereignisprotokollierungsmodus, Speichern der Ereignisberichte in einem persistenten Speichermittel (14),
Umschalten des Betriebsmodus der Agentenvorrichtung (10) von dem Ereignisweiterleitungsmodus in den Ereignisprotokollierungsmodus, wenn die Agentenvorrichtung die spezifische Keepalive-Nachricht nicht innerhalb eines vorgegebenen Zeitraums empfängt, und
Umschalten des Betriebsmodus der Agentenvorrichtung (10) von dem Ereignisprotokollierungsmodus in den Ereignisweiterleitungsmodus, wenn die Agentenvorrichtung die spezifische Keepalive-Nachricht empfängt, wobei beide Betriebsmodi dieselben vorgegebenen verwaltungssystemspezifischen Filterkriterien hinsichtlich der Auswahl von Ereignisberichten nutzen.

11. Verfahren nach Anspruch 10, wobei jeder der Ereignisberichte an mindestens eine von einer Mehrzahl von Verwaltungsvorrichtungen des Verwaltungssystems weiterzuleiten ist, das Verfahren umfassend:
Umschalten des Betriebsmodus der Agentenvorrichtung von dem Ereignisweiterleitungsmodus in den Ereignisprotokollierungsmodus für eine Verwaltungsvorrichtung der Mehrzahl von Verwaltungsvorrichtungen, wenn die Agentenvorrichtung die spezifische Keepalive-Nachricht von der Verwaltungsvorrichtung nicht innerhalb eines vorgegebenen Zeitraums für die Verwaltungsvorrichtung empfängt, und
Umschalten des Betriebsmodus der Agentenvorrichtung für die Verwaltungsvorrichtung von dem Ereignisprotokollierungsmodus in den Ereignisweiterleitungsmodus, wenn die Agentenvorrichtung die spezifische Keepalive-Nachricht von der Verwaltungsvorrichtung empfängt,
in dem Ereignisweiterleitungsmodus für die Verwaltungsvorrichtung, Bewirken, dass die Agentenvorrichtung die Ereignisberichte, die an die Verwaltungsvorrichtung weiterzuleiten sind, an die Verwaltungsvorrichtung weiterleitet, und
in dem Ereignisweiterleitungsmodus für die Verwaltungsvorrichtung, Speichern der Ereignisberichte, die an die Verwaltungsvorrichtung weiterzuleiten sind, in dem persistenten Speichermittel.

12. Verfahren nach Anspruch 11, umfassend:
in dem Ereignisweiterleitungsmodus für die Verwaltungsvorrichtung, temporäres Speichern der Ereignisberichte, die an die Verwaltungsvorrichtung weiterzuleiten sind, in einem temporären Speichermittel (15), wobei die Agentenvorrichtung die Ereignisberichte, die temporär in dem temporären Speichermittel gespeichert sind, an die Verwaltungsvorrichtung weiterleitet, und
wenn der Betriebsmodus der Agentenvorrichtung für die Verwaltungsvorrichtung von dem Ereignisweiterleitungsmodus in den Ereignisprotokollierungsmodus umgeschaltet ist, Verschieben der Ereignisberichte, die an die Verwaltungsvorrichtung weiterzuleiten sind, die temporär in dem temporären Speichermittel gespeichert sind, in das persistente Speichermittel.

13. Verfahren nach Anspruch 12, umfassend:
wenn der Betriebsmodus der Agentenvorrichtung für die Verwaltungsvorrichtung von dem Ereignisprotokollierungsmodus in den Ereignisweiterleitungsmodus umgeschaltet ist, Bewirken, dass die Agentenvorrichtung die Ereignisberichte, die an die Verwaltungsvorrichtung weiterzuleiten sind, die in dem persistenten Speichermittel gespeichert sind, an die Verwaltungsvorrichtung weiterleitet.

14. Verfahren nach einem der Ansprüche 11 bis 13, wobei das temporäre Speichermittel und das persistente Speichermittel jeweils einen gemeinsamen Speicher für die Mehrzahl von Verwaltungsvorrichtungen umfassen, das Verfahren umfassend:
beim Speichern der Ereignisberichte in dem temporären Speichermittel oder dem persistenten Speichermittel, Speichern der Ereignisberichte zusammen mit mindestens einem von einer Mehrzahl von Indikatoren, die angeben, an welche der Mehrzahl von Verwaltungsvorrichtungen die Ereignisberichte weiterzuleiten sind, wobei jeder der Mehrzahl von Indikatoren mit einem von der Mehrzahl von Verwaltungsvorrichtungen in Verbindung steht.

15. Verfahren nach Anspruch 14, umfassend:
Löschen des Indikators der Verwaltungsvorrichtung aus dem temporären Speichermittel oder dem persistenten Speichermittel (14) nach dem Bewirken der Weiterleitung der Ereignisberichte, die durch die Agentenvorrichtung an die Verwaltungsvorrichtung weiterzuleiten sind, und Löschen der Ereignisberichte, die an die Verwaltungsvorrichtung weiterzuleiten sind, aus dem temporären Speichermittel oder dem persistenten Speichermittel, falls kein Indikator für eine andere Verwaltungsvorrichtung zusammen mit den Ereignisberichten in dem temporären Speichermittel oder dem persistenten Speichermittel gespeichert ist.

16. Verfahren nach einem der Ansprüche 11 bis 13, wobei das temporäre Speichermittel einen gemeinsamen Speicher für die Mehrzahl von Verwaltungsvorrichtungen umfasst, das Verfahren umfassend:
beim Speichern der Ereignisberichte in dem temporären Speichermittel (15), Speichern der Ereignisberichte zusammen mit mindestens einem von einer Mehrzahl von Indikatoren, die angeben, an welche der Mehrzahl von Verwaltungsvorrichtungen die Ereignisberichte weiterzuleiten sind, wobei jeder der Mehrzahl von Indikatoren mit einem von der Mehrzahl von Verwaltungsvorrichtungen in Verbindung steht, und
wobei das persistente Speichermittel (14) separate Speicher für jede der Mehrzahl von Verwaltungsvorrichtungen umfasst.

17. Verfahren nach Anspruch 16, umfassend:
Löschen der Ereignisberichte, die an die Verwaltungsvorrichtung weiterzuleiten sind, aus dem persistenten Speichermittel, nach dem Bewirken ihrer Weiterleitung durch die Agentenvorrichtung, und
Löschen des Indikators der Verwaltungsvorrichtung aus dem temporären Speichermittel nach dem Bewirken der Weiterleitung der Ereignisberichte, die durch die Agentenvorrichtung an die Verwaltungsvorrichtung weiterzuleiten sind, und Löschen der Ereignisberichte, die an die Verwaltungsvorrichtung weiterzuleiten sind, aus dem temporären Speichermittel, falls kein Indikator für eine andere Verwaltungsvorrichtung zusammen mit den Ereignisberichten in dem temporären Speichermittel gespeichert ist.

18. Verfahren nach einem der Ansprüche 11 bis 17, umfassend:
in dem Ereignisweiterleitungsmodus, Bewirken, dass die Agentenvorrichtung die Ereignisberichte an die Verwaltungsvorrichtung weiterleitet, falls eine Anforderung für den Empfang von Ereignisberichten zuvor durch die Agentenvorrichtung von der Verwaltungsvorrichtung empfangen wurde.

19. Computerprogramm, das geeignet ist, die Verfahren nach den Ansprüchen 10 bis 18 durchzuführen.

## Revendications

1. Appareil d'agent (10) pour communiquer avec un système de gestion comprenant :
une unité de communication (11) configurée pour recevoir un message spécifique de maintien en activité (« keep alive ») transmis périodiquement du système de gestion et pour retransmettre des comptes rendus des événements ;
une unité de distribution des événements (12) configurée pour commuter un mode de fonctionnement de l'appareil d'agent (10) entre un mode de retransmission des événements et un mode de journalisation des événements ; et
une unité de commande (13) configurée pour commander l'appareil d'agent (10),
un moyen de mémoire temporaire (15) et un moyen de mémoire persistante (14), dans lesquels,
en mode de retransmission des événements, l'unité de commande (13) est configurée pour amener l'unité de communication (11) à introduire les comptes rendus des événements dans le moyen de mémoire temporaire (15) et à les retransmettre ensuite au système de gestion, et
en mode de journalisation des événements, l'unité de commande (13) est configurée pour stocker les comptes rendus des événements dans un moyen de mémoire persistante (14), et dans lequel
l'unité de distribution des événements (12) est configurée pour commuter le mode de fonctionnement de l'appareil d'agent entre un mode de retransmission des événements et un mode de journalisation des événements lorsque l'unité de communication (11) ne reçoit pas le message spécifique de maintien en activité dans un délai prédéfini, et
l'unité de distribution des événements (12) est configurée pour commuter le mode de fonctionnement de l'appareil d'agent du mode de journalisation des événements au mode de retransmission des événements lorsque l'unité de communication (11) reçoit le message spécifique de maintien en activité,
dans lequel les deux modes de fonctionnement utilisent les mêmes critères de filtrage prédéfinis spécifiques au système de gestion en ce qui concerne la sélection des comptes rendus des événements, et dans lequel les critères sont reçus du système de gestion dans une demande d'abonnement à une heure de début de la communication entre gestionnaire et agent ou sont préconfigurés localement dans l'appareil d'agent (10).

2. Appareil d'agent (10) selon la revendication 1, dans lequel chacun des comptes rendus des événements doit être retransmis à au moins l'un d'une pluralité de dispositifs de gestion du système de gestion, dans lequel
l'unité de distribution des événements (12) est configurée pour commuter le mode de fonctionnement de l'appareil d'agent (10) du mode de retransmission des événements au mode de journalisation des événements pour un dispositif de gestion parmi une pluralité de dispositifs de gestion, lorsque l'unité de communication (11) ne reçoit pas le message spécifique de maintien en activité du dispositif de gestion dans un délai prédéfini pour le dispositif de gestion, et
l'unité de distribution des événements (12) est configurée pour commuter le mode de fonctionnement de l'appareil d'agent (10) pour le dispositif de gestion du mode de journalisation des événements au mode de retransmission des événements lorsque l'unité de communication (11) reçoit le message spécifique de maintien en activité du dispositif de gestion, et dans lequel
en mode de retransmission des événements pour le dispositif de gestion, l'unité de commande (13) est configurée pour amener l'unité de communication (11) à retransmettre au dispositif de gestion les comptes rendus des événements, qui doivent être retransmis au dispositif de gestion, et
en mode de journalisation des événements pour le dispositif de gestion, l'unité de commande (13) est configurée pour stocker les comptes rendus des événements, qui doivent être retransmis au dispositif de gestion, dans le moyen de mémoire persistante (14).

3. Appareil d'agent (10) selon la revendication 2, dans lequel,
en mode de retransmission des événements pour le dispositif de gestion, l'unité de commande (13) est configurée pour stocker temporairement les comptes rendus des événements à retransmettre au dispositif de gestion dans le moyen de mémoire temporaire (15) et l'unité de communication (11) est configurée pour retransmettre les comptes rendus des événements stockés temporairement dans le moyen de mémoire temporaire (15) au dispositif de gestion, et
lorsque l'unité de distribution des événements (12) commute le mode de fonctionnement de l'appareil d'agent (10) pour le dispositif de gestion, passant du mode de retransmission des événements au mode de journalisation des événements, l'unité de commande (13) est configurée pour déplacer les comptes rendus des événements à retransmettre au dispositif de gestion, qui sont stockés temporairement dans le moyen de mémoire temporaire (15), au moyen de mémoire persistante (14).

4. Appareil d'agent (10) selon la revendication 3, dans lequel, lorsque l'unité de distribution des événements (12) commute le mode de fonctionnement de l'appareil d'agent (10) pour le dispositif de gestion et passe du mode de journalisation des événements au mode de retransmission des événements, l'unité de commande (13) est configurée pour amener l'unité de communication (11) à retransmettre au dispositif de gestion les comptes rendus des événements qui sont stockés dans le moyen de mémoire persistante (14) et doivent être retransmis au dispositif de gestion.

5. Appareil d'agent (10) selon l'une quelconque des revendications 2 à 4, dans lequel le moyen de mémoire temporaire et le moyen de mémoire persistante comprennent chacun une mémoire commune pour la pluralité des dispositifs de gestion et, lors du stockage des comptes rendus des événements dans le moyen de mémoire temporaire (15) ou le moyen de mémoire persistante (14), l'unité de commande (13) est configurée pour stocker ensemble les comptes rendus des événements avec au moins un indicateur parmi une pluralité d'indicateurs indiquant à quel dispositif parmi la pluralité de dispositifs de gestion les comptes rendus des événements doivent être retransmis, dans lequel chacun de la pluralité des indicateurs est associé à l'un de la pluralité des dispositifs de gestion.

6. Appareil d'agent (10) selon la revendication 5, dans lequel l'unité de commande (13) est configurée pour supprimer l'indicateur du dispositif de gestion du moyen de mémoire temporaire ou du moyen de mémoire persistante (14), après avoir provoqué la retransmission du compte rendu des événements au dispositif de gestion par l'unité de communication (11), et pour supprimer les comptes rendus des événements à retransmettre au dispositif de gestion du moyen de mémoire temporaire ou du moyen de mémoire persistante au cas où aucun indicateur d'un autre dispositif de gestion n'est stocké ensemble avec les comptes rendus des événements dans le moyen de mémoire temporaire ou le moyen de mémoire persistante.

7. Appareil d'agent (10) selon l'une quelconque des revendications 2 à 4, dans lequel le moyen de mémoire temporaire comprend une mémoire commune pour la pluralité de dispositifs de gestion et, lors du stockage des comptes rendus des événements dans le moyen de mémoire temporaire (15), l'unité de commande (13) est configurée pour stocker ensemble les comptes rendus des événements avec au moins un indicateur parmi une pluralité d'indicateurs indiquant à quel dispositif parmi la pluralité de dispositifs de gestion les comptes rendus des événements doivent être retransmis, dans lequel chacun de la pluralité des indicateurs est associé à l'un de la pluralité des dispositifs de gestion, et
dans lequel le moyen de mémoire persistante (14) comprend des mémoires séparées pour chacun de la pluralité des dispositifs de gestion.

8. Appareil d'agent (10) selon la revendication 7, dans lequel l'unité de commande (13) est configurée pour supprimer les comptes rendus des événements à retransmettre au dispositif de gestion du moyen de mémoire persistante (14), après avoir provoqué leur retransmission par l'unité de communication (11), et
dans lequel l'unité de commande (13) est configurée pour supprimer l'indicateur du dispositif de gestion du moyen de mémoire temporaire, après avoir provoqué la retransmission des comptes rendus des événements à retransmettre au dispositif de gestion par l'unité de communication (11), et pour supprimer les comptes rendus des événements à retransmettre au dispositif de gestion du moyen de mémoire temporaire au cas où aucun indicateur d'un autre dispositif de gestion n'est stocké ensemble avec les comptes rendus des événements dans le moyen de mémoire temporaire.

9. Appareil d'agent (10) selon l'une quelconque des revendications 2 à 8, dans lequel, en mode de retransmission des événements, l'unité de commande (13) est configurée pour amener l'unité de communication (11) à retransmettre les comptes rendus des événements au dispositif de gestion dans le cas où une demande de réception de comptes rendus des événements a été reçue au préalable par l'appareil d'agent (10) en provenance du dispositif de gestion.

10. Procédé de commande d'un appareil d'agent (10) pour communiquer avec un système de gestion recevant un message spécifique de maintien en activité transmis périodiquement du système de gestion et retransmettre les comptes rendus des événements, un mode de fonctionnement de l'appareil d'agent comprenant un mode de retransmission des événements et un mode de journalisation des événements, le procédé comprenant :
la réception, du système de gestion à un moment de début de la communication entre gestionnaire et agent,
d'une demande d'abonnement contenant les critères de sélection des informations d'événement requises ou préconfigurant localement, dans l'appareil d'agent (10), les critères de sélection ;
en mode de retransmission des événements, la commande à l'appareil d'agent d'introduire les comptes rendus des événements dans un moyen de mémoire temporaire (15) et de retransmettre ensuite les comptes rendus des événements au système de gestion,
en mode de journalisation des événements, le stockage des comptes rendus des événements dans un moyen de mémoire persistante (14),
la commutation du mode de fonctionnement de l'appareil d'agent (10) du mode de retransmission des événements au mode de journalisation des événements lorsque l'appareil d'agent ne reçoit pas le message spécifique de maintien en activité dans un délai prédéfini, et
la commutation du mode de fonctionnement de l'appareil d'agent (10) du mode de journalisation des événements au mode de retransmission des événements lorsque l'appareil d'agent reçoit le message spécifique de maintien en activité,
dans lequel les deux modes de fonctionnement utilisent les mêmes critères de filtrage prédéfinis spécifiques au système de gestion en ce qui concerne la sélection des comptes rendus des événements,

11. Procédé selon la revendication 10, dans lequel chacun des comptes rendus des événements doit être retransmis à au moins l'un d'une pluralité de dispositifs de gestion du système de gestion, le procédé comprenant :
la commutation du mode de fonctionnement de l'appareil d'agent du mode de retransmission des événements au mode de journalisation des événements pour un dispositif de gestion parmi une pluralité de dispositifs de gestion, lorsque l'appareil d'agent ne reçoit pas le message spécifique de maintien en activité du dispositif de gestion dans un délai prédéfini pour le dispositif de gestion, et
la commutation du mode de fonctionnement de l'appareil d'agent pour le dispositif de gestion du mode de journalisation des événements au mode de retransmission des événements lorsque l'appareil d'agent reçoit le message spécifique de maintien en activité du dispositif de gestion,
en mode de retransmission des événements pour le dispositif de gestion, l'entraînement de l'unité de communication à retransmettre au dispositif de gestion les comptes rendus des événements, qui doivent être retransmis au dispositif de gestion, et
en mode de journalisation des événements pour le dispositif de gestion, le stockage des comptes rendus des événements, qui doivent être retransmis au dispositif de gestion, dans les moyens de mémoire persistante.

12. Procédé selon la revendication 11, comprenant :
en mode de retransmission des événements pour le dispositif de gestion, le stockage temporaire des comptes rendus des événements à retransmettre au dispositif de gestion dans le moyen de mémoire temporaire (15), l'appareil d'agent retransmettant les comptes rendus des événements stockés temporairement dans le moyen de mémoire temporaire au dispositif de gestion, et
lorsque le mode de fonctionnement de l'appareil d'agent pour le dispositif de gestion est commuté du mode de retransmission des événements au mode de journalisation des événements, le déplacement des comptes rendus des événements à retransmettre au dispositif de gestion, qui sont stockés temporairement dans le moyen de mémoire temporaire, sur le moyen de mémoire persistante.

13. Procédé selon la revendication 12, comprenant :
lorsque le mode de fonctionnement de l'appareil d'agent (10) pour le dispositif de gestion passe du mode de journalisation des événements au mode de retransmission des événements, l'entraînement de l'appareil d'agent à retransmettre au dispositif de gestion les comptes rendus des événements à retransmettre au dispositif de gestion, qui sont stockés dans le moyen de mémoire persistante.

14. Procédé selon l'une quelconque des revendications 11 à 13, dans lequel le moyen de mémoire temporaire et le moyen de mémoire persistante comprennent chacun une mémoire commune pour la pluralité des dispositifs de gestion, le procédé comprenant :
lors du stockage des comptes rendus des événements dans le moyen de mémoire temporaire ou le moyen de mémoire persistante, le stockage des comptes rendus des événements avec au moins un indicateur parmi une pluralité d'indicateurs indiquant à quel dispositif parmi la pluralité des dispositifs de gestion les comptes rendus des événements doivent être retransmis, dans lequel chacun de la pluralité d'indicateurs est associé à l'un de la pluralité des dispositifs de gestion.

15. Procédé selon la revendication 14, comprenant :
la suppression de l'indicateur du dispositif de gestion du moyen de mémoire temporaire ou du moyen de mémoire persistante (14), après avoir provoqué la retransmission des comptes rendus des événements à retransmettre au dispositif de gestion par l'appareil d'agent, et la suppression des comptes rendus des événements à retransmettre au dispositif de gestion du moyen de mémoire temporaire ou du moyen de mémoire persistante au cas où aucun indicateur d'un autre dispositif de gestion n'est stocké ensemble avec les comptes rendus des événements dans le moyen de mémoire temporaire ou le moyen de mémoire persistante.

16. Procédé selon l'une quelconque des revendications 11 à 13, dans lequel le moyen de mémoire temporaire comprend une mémoire commune pour la pluralité de dispositifs de gestion, le procédé comprenant :
lors du stockage des comptes rendus des événements dans le moyen de mémoire temporaire (15), le stockage ensemble des comptes rendus des événements avec au moins un indicateur parmi une pluralité d'indicateurs indiquant à quel dispositif parmi la pluralité de dispositifs de gestion les comptes rendus des événements doivent être retransmis, dans lequel chacun de la pluralité des indicateurs est associé à l'un de la pluralité des dispositifs de gestion, et
dans lequel le moyen de mémoire persistante (14) comprend des mémoires séparées pour chacun de la pluralité des dispositifs de gestion.

17. Procédé selon la revendication 16, comprenant :
la suppression des comptes rendus des événements à retransmettre au dispositif de gestion du moyen de mémoire persistante, après avoir provoqué leur retransmission par l'appareil d'agent ; et
la suppression de l'indicateur du dispositif de gestion du moyen de mémoire temporaire, après avoir provoqué la retransmission des comptes rendus des événements à retransmettre au dispositif de gestion par l'appareil d'agent, et la suppression des comptes rendus des événements à retransmettre au dispositif de gestion du moyen de mémoire temporaire au cas où aucun indicateur d'un autre dispositif de gestion n'est stocké ensemble avec les comptes rendus des événements dans le moyen de mémoire temporaire.

18. Procédé selon l'une quelconque des revendications 11 à 17, comprenant :
en mode de retransmission des événements, l'entraînement de l'appareil d'agent à retransmettre les comptes rendus des événements au dispositif de gestion dans le cas où une demande de réception de comptes rendus des événements a été reçue au préalable par l'appareil d'agent en provenance du dispositif de gestion.

19. Programme informatique conçu pour mettre en oeuvre les procédés selon les revendications 10 à 18.
